# EUROPEAN PATENT SPECIFICATION

(11) **EP 0 310 373 B1**
(45) Date of publication and mention of the grant of the patent: **01.03.1995**
(21) Application number: 88309022.7
(22) Date of filing: 29.09.1988
(51) Int. Cl.: G11B 20/10, H04N 5/92, G11B 5/03, G11B 20/14, H04N 5/782

(54) **Information recording apparatus**
Aufzeichnungsgerät für Informationen
Appareil d'enregistrement d'information

(30) Priority: 30.09.1987 JP 246917/87; 05.10.1987 JP 251109/87
(43) Date of publication of application: 05.04.1989
(73) Proprietor: SONY CORPORATION, Tokyo 141 (JP)
(72) Inventor: Kanota, Keiji c/o Patents Division, Shinagawa-ku Tokyo 141 (JP); Murabayashi, Noboru c/o Patents Division, Shinagawa-ku Tokyo 141 (JP)
(74) Representative: Cotter, Ivan John

(56) References cited:
- EP-A- 0 143 005
- EP-A- 0 249 482
- US-A- 4 379 311
- US-A- 4 551 771
- US-A- 4 611 253
- US-A- 4 644 419
- JOURNAL OF IMAGING TECHNOLOGY. vol. 12, no. 5, October 86, SPRINGFIELD US page280 - 287; Y. Shibata and Y. Machida: "The 8mm Video Fornmat and How It WasEstablished"
- PATENT ABSTRACTS OF JAPAN vol. 7, no. 42 (P-177)(1187) 19 February 83,& JP-A-57 191813 (NIPPON COLUMBIA) 25 November 82,
- AUDIO. vol. 69, no. 6, June 85, New York, US page 72 - 81; Herman Burstein:"The Whys and Hows of Cassette Equalization"
- PATENT ABSTRACTS OF JAPAN vol. 7, no. 60 (P-182)(1205) 12 March 83,& JP-A-57 205804 (AKAI DENKI) 17 December 82,
- PATENT ABSTRACTS OF JAPAN vol. 6, no. 179 (P-142)(1057) 14 September 82,& JP-A-57 94909 (HITACHI) 12 June 82,
- PATENT ABSTRACTS OF JAPAN vol. 6, no. 46 (P-107)(924) 24 March 82,& JP-A-56 163506 (MATSUSHITA) 16 December 81,

## Description

This invention relates to information recording apparatus.

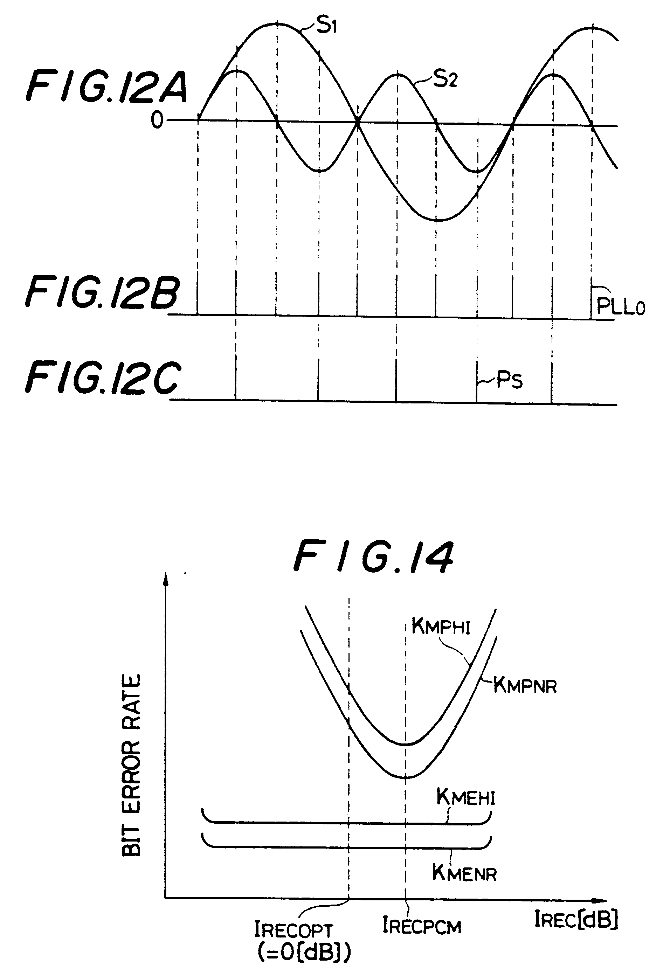

As shown in Figure 11, a data recording apparatus used for recording a pulse code modulated (PCM) audio signal, for example in an 8-mm format video tape recorder (VTR) forms an audio track TR_{AD} adjacent to each video track TR_{VD}. These tracks constitute two-channel recording tracks TRA and TRB. An audio signal is PCM-encoded, compressed along the time base, modulated by biphase-mark modulation, and recorded on the audio track TR_{AD} on a magnetic tape 1 used as the recording medium (see US patent specification US-A-4 551 771).

In biphase-mark modulation, as shown in Figure 12A, frequency signals S1 and S2 having frequencies f1 (2.9 MHz) and f2 (5.8 MHz) are recorded as digital data on the tape 1 while keeping a phase relationship such that their zero-crossing points coincide with each other. For example, when a PCM audio signal is at logic 'L', the signal S1 having the low frequency f1 is recorded, while when the PCM audio signal is at logic 'H', the signal S2 having the high frequency f2 is recorded.

When an audio signal recorded on the audio track TR_{AD} is played back, the zero-crossing point on the picked-up signal S1 or S2 is detected, as shown in Figure 12B. Upon this detection, a sampling pulse oscillator, for example with a phase locked loop (PLL) arrangement, is caused to supply pulse outputs PLL₀ having a phase shift of 45° from the signal S1 of low frequency f1, or a phase shift of 90° from the signal S2 of high frequency f2.

Of the pulse outputs PLL₀, pulses generated at the phase angles 45°, 135°, 225° and 315° of the signal S1 are used as sampling pulses PS (Figure 12C) to sample playback data. When every other two sampled values have positive values, it is determined that the data are playback data at logic "L" level.

Of the pulse outputs PLL₀, pulses generated at the phase angles 90° and 270° of the signal S2 are used as sampling pulses PS (Figure 12C) to sample playback data. When every other sampled value has a positive value, it is determined that the data are playback data at logic "H" level.

A playback process for biphase-mark recorded data is described in our European patent specification EP-A-0 264 228.

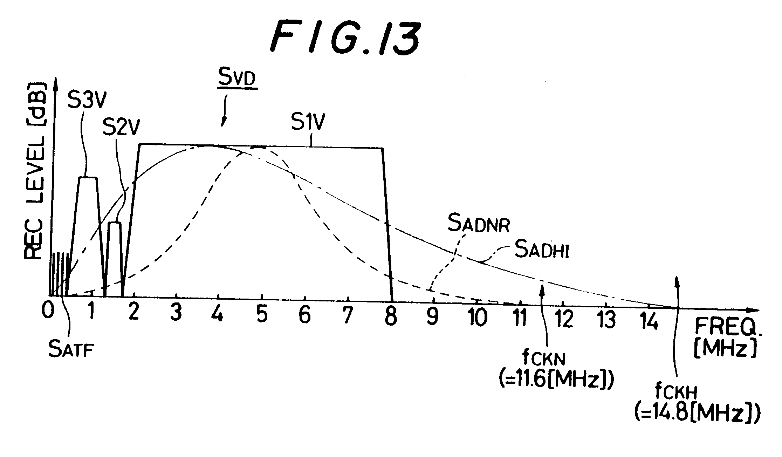

As shown in Figure 13, a video signal S_{VD} consisting of a frequency modulated (FM) luminance signal S1V, an FM audio signal S2V of lower frequency than the signal S1V, and a low-frequency chromatic signal S3V, and an automatic track follower (ATF) signals S_{ATF} are superimposed and recorded on the video track TR_{VD}. The same magnetic head as that used for recording these signals is used to record a PCM audio signal S_{ADNR}. The frequency spectrum of the PCM audio signal S_{ADNR} has a peak value at a frequency which substantially coincides with the centre frequency of the FM luminance signal S1V. The PCM audio signal has frequency characteristics wherein the signal level comes closer to zero in high and low frequency spectral ranges of the video signal S_{VD}. For this reason, the same degree of azimuth loss as that obtained when the video signal S_{VD} is played back occurs when the PCM audio signal S_{ADNR} is played back. Therefore, the PCM audio signal S_{ADNR} can be recorded and played back with no guard band between adjacent tracks.

Digital data recorded on a magnetic recording medium may have different sampling frequencies depending on the application. Therefore, a plurality of types of recording media which record digital data with different recording densities must be played back while maintaining compatibility. Thus, the functions of the data playback apparatus are increased, and applicability can be further widened.

Suppose then that in an 8-mm VTR, the recording medium which records PCM audio data having a standard digital information content sampled at a standard sampling frequency is provided, and in addition, an optional recording medium which records PCM audio data having a larger content of high-quality digital data sampled at a sampling frequency corresponding to a predetermined multiple of the standard sampling frequency is provided. It is required to play back these recording media using a common 8-mm VTR, so that a standard-quality audio signal can be played back from a standard quality recording medium, and a high-quality audio signal can be played back from the optional high-quality recording medium. Therefore, the 8-mm VTR is multifunction.

However, if the same recording current is supplied to a magnetic head regardless of the types of magnetic recording media used when data are recorded on magnetic recording media at different recording densities, a bit error rate may be increased when the recording data are played back.

US patent specification US-A-4 551 771 discloses magnetic recording apparatus having features corresponding to the pre-characterizing part of claim 1. Also, US patent specification US-A-4 379 311 discloses a recording bias setting device with means to select a bias current value from among a plurality of predetermined bias current values for recording an AC test signal.

According to the present invention there is provided an apparatus for recording an analogue video signal and a digital audio signal in parallel adjacent tracks on a magnetic recording medium, said analogue video signal comprising frequency modulated signal components having a predetermined frequency spectrum, and said digital audio signal comprising components having a peak in the frequency spectrum of the analogue video signal, the apparatus comprising:
a first audio circuit comprising:
means for sampling an input audio signal at a given standard sampling rate and converting it into P-bits PCM digital data;
means for compressing the PCM digital data; and
means for biphase-mark modulating the compressed PCM digital data so that the different binary states correspond to different frequency components to produce a standard recording signal having a standard density for standard quality recording;
wherein the standard recording signal has a central spectrum component substantially the same as the recordable frequency spectrum of the frequency-modulated analogue video signal;
a recording amplifier for amplifying the standard recording signal; and at least two rotary magnetic heads having air gaps of different azimuth angles for tracking the parallel adjacent tracks and recording the amplified recording signal therein;
characterised by:
the first audio circuit further comprising means for adding a cyclic redundancy check error code (CRC) to the P-bit PCM digital data; the compressing means comprising a non-linear encoder or compressor for compressing the P-bit digital data with the CRC error code to Q-bit data (where Q < P) which is modulated by the biphase-mark modulating means;
a second audio circuit comprising:
means for sampling the input audio signal at a given high-quality sampling rate higher than the standard sampling rate to produce sampled digital data;
means for adding a Cross-Interleaved Reed-Solomon (CIRS) error code to the sampled digital data; and
means for segmenting the digital data bits with the CIRS error code into N-bit blocks, converting each N-bit block into an M-bit data string, and selecting 2^{N} patterns from 2^{M} converted patterns to produce a group code modulated high-quality recording signal having a high density for high-quality recording;
wherein the high-quality recording signal has a central spectrum component in a frequency band lower than the frequency spectrum component of the standard recording signal;
the recording amplifier being alternatively operable to amplify the high-quality recording signal for supply to the magnetic heads; and
means for varying a setting condition of an amplified current from the recording amplifier corresponding to the standard-quality or high-quality recording signal.

Embodiments of the present invention provide a data recording apparatus in which digital recording currents are supplied to two magnetic recording heads so as to record recording data on a magnetic recording medium, the apparatus comprising recording amplifier means for supplying, to one of the magnetic heads, the first or second recording current for recording the recording data at one of first and second recording densities which are different from each other, and recording current switching means for controlling the recording amplifier means such that a carrier-to-noise (C/N) value of a playback signal is increased when the recording data are played back using the first or second recording density as a current switching condition, thereby controlling switching of a value of the first or second recording current.

When the recording data are recorded on the magnetic recording medium, the recording currents are adaptively switched to a value corresponding to the recording density of the recording data. Thus, the bit error rate can be decreased when the recording data are placed back.

The invention will now be described by way of example with reference to the accompanying drawings, throughout which like parts are referred to by like references, and in which:
Figure 1 is a block diagram showing an embodiment of data recording apparatus according to the present invention;
Figure 2 is a circuit diagram showing a detailed arrangement of a recording/playback circuit of Figure 1;
Figure 3 is a table showing recording current switching conditions;
Figure 4 is a graph showing the relationship between the recording current and C/N when recording is performed at different recording densities;
Figure 5 is a graph showing the relationship between C/N and a bit error rate;
Figures 6 and 7 are sectional views respectively showing a coating type magnetic tape and a vapour deposition type magnetic tape;
Figure 8 is a graph showing amplitude characteristics of the tapes of Figures 6 and 7;
Figure 9 is a graph showing the relationship between the recording current and C/N when a difference in recording quality and a difference in magnetic tape are used as recording current switching conditions;
Figure 10 is a diagram showing a recording pattern corresponding to a difference in travel speed of a magnetic tape;
Figure 11 is a diagram for explaining a recording pattern on a magnetic tape;
Figure 12 is a signal waveform chart for explaining a biphase-mark modulation;
Figure 13 is a graph for explaining a recording signal spectrum; and
Figure 14 is a graph for explaining another embodiment in which setting of a recording current is further improved.

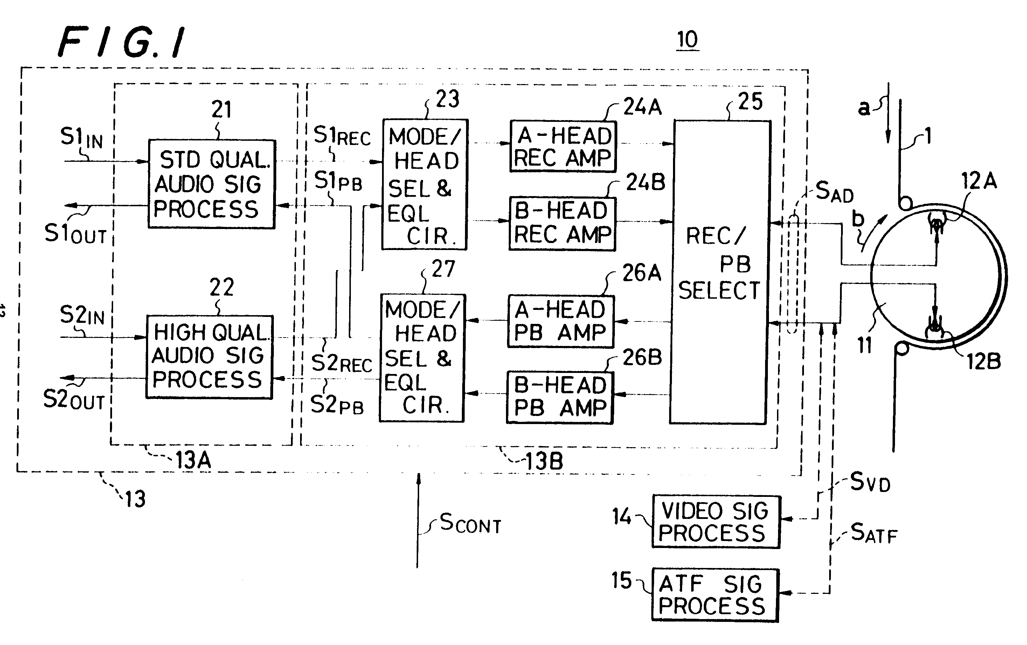

Figure 1 shows an embodiment wherein the present invention is applied to an 8-mm VTR. A data recording/playback apparatus 10 comprises a pair of magnetic heads (to be referred to as A and B heads) 12A and 12B mounted on a rotary drum 11 so as to scan a magnetic tape 1 helically. As has been described above with reference to Figure 11, the A and B heads 12A and 12B sequentially and alternately scan recording tracks TRA and TRB consisting of video tracks TR_{VD} and audio tracks TR_{AD}.

The A and B heads 12A and 12B are connected to a PCM audio signal processing section 13, a video signal processing section 14, and an automatic track following (ATF) signal processing section 15 for automatic head tracking. In a recording mode, a video signal S_{VD} and an ATF signal S_{ATF} from the video and ATF signal processing sections 14 and 15 are superimposed and recorded on the video track TR_{VD}. A PCM audio signal S_{AD} from the PCM audio signal processing section 13 is recorded on the audio track TR_{AD}.

The PCM audio signal processing sectin 13 comprises an audio data processing unit 13A and a recording/playback circuit 13B respectively controlled by a control signal S_{CONT} supplied from a system controller.

The audio data processing unit 13A has a standard-quality audio signal processing circuit 21 and a high-quality audio signal processing circuit 22. In the recording mode, recording audio data S1_{REC} and S2_{REC} formed by first and second audio input signals S1_{IN} and S2_{IN} as analogue signals are supplied to mode/head selector circuit 23 in a part of the recording/playback circuit 13B.

The mode/head selector circuit 23 selects one of the recording audio data S1_{REC} and S2_{REC} in accordance with a designated one of standard and high-quality recording modes. The selected data are sequentially supplied to an REC/PB selector circuit 25 through an A or B-head REC amplifier 24A or 24B.

The selector circuit 25 sequentially supplies the audio data supplied from the A or B-head REC amplifier 24A or 24B to the A or B head 12A or 12B as audio data S_{AD} at predetermined timings, thereby recording the data on the audio track TR_{AD} (Figure 11).

In the playback mode, the REC/PB selector circuit 25 supplies the audio signal S_{AD} picked up the A and B heads 12A and 12B to a mode/head selector and equalizer circuit 27 through an A or B-head PB amplifier 26A or 26B.

The mode/head selector and equalizer circuit 27 selectively fetches the playback audio signal input from the A or B-head PB amplifier 26A or 26B, and executes predetermined equalizing processing in accordance with the present mode (that is, the standard or high-quality playback mode). Thereafter, playback audio data S1_{PB} or S2_{PB} are selectively supplied to the standard or high-quality audio signal processing circuit 21 or 22.

The audio signal processing circuits 21 and 22 convert the input playback audio data S1_{PB} and S2_{PB} into analogue signals, and supply them as first and second audio signals S1_{OUT} and S2_{OUT}.

In this embodiment, the standard-quality audio signal processing circuit 21 samples the input first audio signal S1_{IN} at a standard sampling frequency (for example, 2f_{H} = 31.5 MHz) to convert it into 10-bit PCM digital data. A cyclic redundancy check (CRC) error code is added to the digital data. The number of bits of the digital data is compressed by 10 to 8 bit conversion or compression. The compressed data are subjected to biphase-mark modulation, and supplied as recording audio data S1_{REC}.

The 10 to 8 bit conversion is employed in a non-linear encoder or a non-linear compressor which performs non-linear quantization for reducing quantizing noise.

The audio signal processing circuit 21 samples the input first audio signal S1_{IN} at a standard sampling frequency and biphase-mark modulates the sampled signal at a clock frequency CK_{NR} (=11.6 MHz), thus forming recording audio data S1_{REC} consisting of two frequency signals S1 and S2 (Figure 12A) of frequencies f1 and f2 (for example, f1 = 2.9 MHz and f2 = 5.8 MHz).

In the standard-quality playback mode, the audio signal processing circuit 21 bi-phase mark demodulates the played-back first playback audio data S1_{PB}, and performs error correction using the CRC error code. The audio signal processing circuit 21 also performs interpolation processing of the audio data, and then performs 10 to 8 inverse conversion. The obtained data are D/A converted to obtain a first audio output signal S1_{OUT}.

The audio signal processing circuit 21 is almost identical with the system disclosed in above-mentioned US patent specification US-A-4 551 771.

The high-quality audio signal processing circuit 22 samples the second audio input signal S2_{IN} at a high-quality sampling frequency (for example, 3f_{H} = 48 kHz) higher than the standard sampling frequency so as to obtain 16-bit PCM digital data. Then, a cross-interleaves Reed-Solomon (CIRC) error code is added to the digital data, and compressed thereafter. The compressed data is then 8 to 10 modulated and non-return to zero inverted (NRZI) converted at a clock frequency CK_{HI} (= 14.8 MHz, that is, Nyquist frequency f_{NYH} = 7.4 MHz) in order to be modulated into a data string which is little influenced by DC level shift. The converted data string is supplied as second recording audio data S2_{REC}.

The 8 to 10 modulation is a kind of group coded recording method. Data bits are segmented into 8-bit blocks. Each block is then converted to a 10-bit code. A set of 2⁸ codes out of 2¹⁰ codes is selected to reduce DC and low frequency components in the frequency spectrum of the modulated signal. Similar modulation is described in US patent specification US-A-4 617 552 and US-A-4 577 180.

In the high-quality playback mode, the audio signal processing circuit 22 performs NRZI decoding and 8 to 10 demodulation of the second playback audio data S2_{PB}. The demodulated data are subjected to error correction using the CIRC error code. Thereafter, the data are subjected to interpolation processing, and are then converted to an analogue signal. The analogue signal is supplied as a second audio output signal S2_{OUT}.

A sampling circuit operated at 48 kHz and a 16-bit PCM digital data processing circuit are available, as employed in a rotary head type digital audio tape recorder (R-DAT).

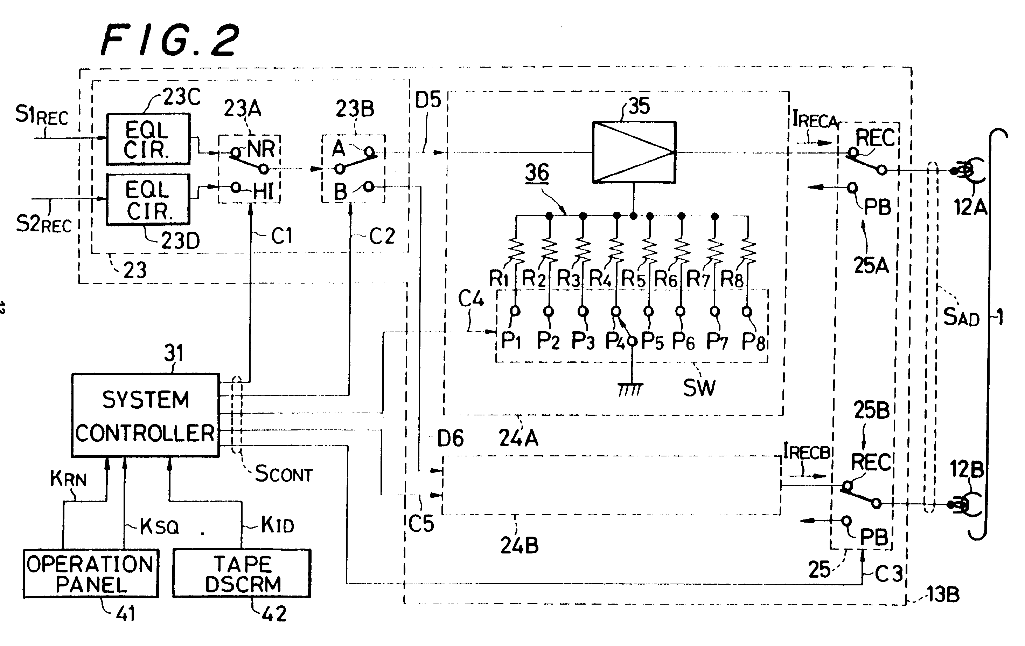

The recording audio data S1_{REC} and S2_{REC} from the audio signal processing circuits 21 and 22 are supplied to a mode selector circuit 23A of the mode/head selector and equalizer circuit 23, as shown in Figure 2. When a mode designation signal C1 supplied as the control signal S_{CONT} from the system controller 31 designates the standard or high-quality recording mode, the data S1_{REC} or S2_{REC} are selectively supplied to the head switch circuit 23B through a standard or high-quality input terminal NR or HI.

The head switch circuit 23B is switched in response to a head switch signal C2 supplied as the control signal S_{CONT} from the system controller 31. The input signal is supplied as recording data D5 or D6 through an A or B-head output terminal A or B.

The recording data D5 are amplified by the A-head REC amplifier 24A, and are supplied to the A head 12A as the audio signal S_{AD} through a recording input terminal REC of the REC/PB switch circuit 25A of the REC/PB switch circuit 25.

In practice, the audio signal S_{AD} supplied to the A head 12A causes a REC amplifier 35 to generate a recording current I_{RECA}. The value of the recording current I_{RECA} is switched by a REC current switch circuit 26 constituting a bias circuit for the REC amplifier 35.

In this embodiment, the REC current switching circuit 36 has eight bias resistors R1 to R8, one end of each of which is commonly connected to the REC amplifier 35. The other end of each of the resistors R1 to R8 is earthed through a corresponding one of switching signal terminals P1 to P8 of a current switch circuit SW.

The current switch circuit SW earths one of the switching signal terminals P1 to P8 in accordance with a switching signal C4 supplied from the system controller 31 as the control signal S_{CONT}. As a result, a recording current I_{RECA} having a value determined by the resistance of the corresponding one of the bias resistors R1 to R8 connected to the earthed switching signal terminal supplied from the REC amplifier 35.

The B-head REC amplifier 24B has the same arrangement as that of the A-head REC amplifier 24A. Recording data D6 from the B-head output terminal B of the head switch circuit 23B cause a corresponding REC amplifier 35 to generate a REC current I_{RECB} corresponding to one of the bias resistors R1 to R8 selected by a switching signal C5 supplied as the control signal S_{CONT} from the system controller 31. The REC current I_{RECB} is supplied to the B head 12B.

The A and B heads 12A and 12B record the audio signal S_{AD} on the tape 1 at a standard recording density (for example 8-bit, 39 kBPI) determined by the REC currents I_{RECA} and I_{RECB} in a standard-quality REC mode. In contrast to this, in a high-quality REC mode, the A and B heads 12A and 12B record the signal S_{AD} at a recording density (for example 16-bit, 80 kBPI) higher than the standard recording density.

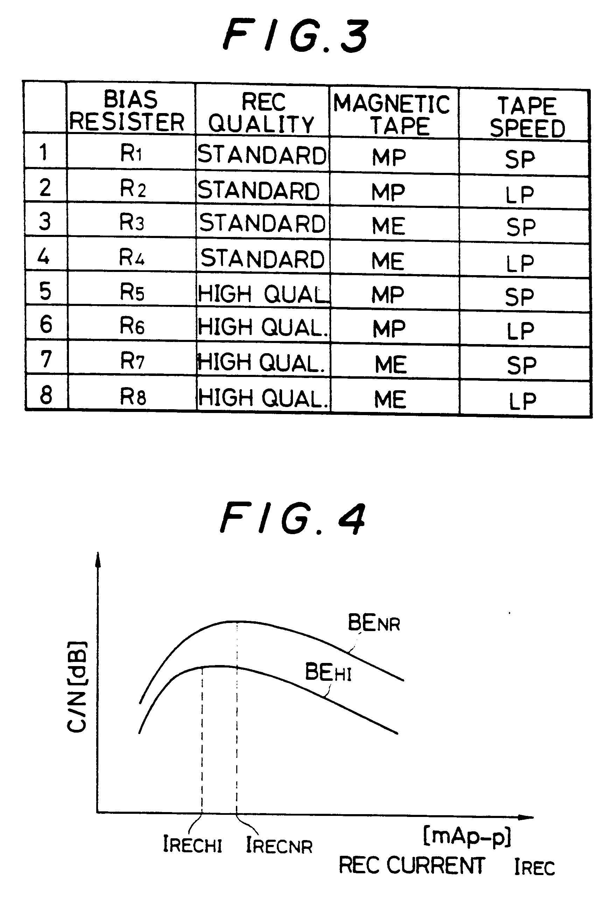

In the above arrangement, the system controller 31 causes the current switch circuit SW to select one of the bias resistors R1 to R8 in accordance with the REC current switching conditions shown in Figure 3.

First, the REC current switching condition is determined by a difference in the recording quality (that is, standard or high-quality) of the audio signal S_{AD} to be recorded on the tape 1. A user supplies to the system controller 31, a recording quality setting signal K_{SQ} representing a standard or high-quality REC mode using an operation panel 41 prior to recording of the audio signal S_{AD} on the tape 1.

When the standard-quality REC mode is selected, first recording audio data S1_{SEC} from the standard-quality audio signal processing circuit 21 are selected by the mode/head selector and equalizer circuit 23, and are supplied to the A or B head 12A or 12B through the A or B-head REC amplifier 24A or 24B and the REC/PB selector circuit 25. As a result, a standard PCM audio signal S_{ANDR} having a frequency spectrum indicated by a broken curve in Figure 13 is recorded on the tape 1.

The standard quality PCM audio signal S_{ANDR} is biphase-mark modulated at frequencies f1 (2.9 MHz) and f2 (5.8 MHz). For this reason, this signal exhibits a frequency spectrum which has a peak at a frequency substantially coinciding with the centre frequency of a frequency modulator (FM) luminance signal S1V of the video signal S_{VD} within the range of the clock frequency f_{CXN} = 2f₂ (= 11.6 MHz). In this manner, a digital signal of a standard recording density is recorded on the tape 1.

In contrast to this, when the high-quality REC mode is selected, the recording quality setting signal K_{SQ} is supplied from the operation panel 41 to the system controller 31. Recording audio data S2_{REC} supplied from the high-quality audio signal processing circuit 22 is selected by the mode/head selector and equalizer and equalizer circuit 23, and is supplied to the A or B head 12A or 12B through the A or B-head REC amplifier 24A or 24B and the REC/PB selector circuit 25. In this manner, a high-quality PCM audio signal S_{ADHI} having a frequency spectrum indicated by an alternate long and short dashed curve in Figure 13 is recorded on the tape 1.

The high-quality PCM audio signal S_{ADHI} is 8 to 10 modulated at the Nyquist frequency f_{NYH} (7.4 MHz) and thereafter, NRZI-modulated. Thus, this signal exhibits a frequency spectrum having a peak frequency near the peak frequency of the standard-quality PCM audio signal S_{ADNR} within the range of the clock frequency f_{CKN} = 2f_{NYH} (14.8 MHz). As a result, a digital signal having a recording density higher than the standard recording density is recorded on the tape 1.

The standard and high-quality PCM audio signals S_{ADNR} and S_{ADHI} have a peak value at a frequency near the centre frequency of the FM luminance signal S1V of the video signal S_{VD}, and have frequency spectra which are converged to zero within the range of the clock frequencies f_{CKN} and f_{CKH}. Therefore, these signals are recorded on the audio track TR_{AD} on the tape 1 by the guard-bandless method without causing cross-talk, by effectively utilising different azimuth angles of the A and B heads 12A and 12B.

However, it has been experimentally demonstrated that when the standard and high-quality PCM audio signals S_{ADNR} and S_{ADHI} having the frequency spectra shown in Figure 13 are recorded on the tape 1, the relationship between the C/N (playback carrier signal level against playback noise ratio) (dB) and a change in REC currents I_{REC} (mAₚ₋ₚ) has tendencies represented by curves BE_{NR} and BE_{HI} shown in Figure 4.

For both the standard and high-quality PCM audio signals S_{ADNR} and S_{ADHI}, when the REC currents I_{REC} are increased from zero, the corresponding C/N values reach their peak values at the currents I_{RECNR} and I_{RECHI}. Thereafter, the C/N values decrease as the recording currents I_{REC} increase.

In addition, between the curves BE_{NR} and BE_{HI}, the high-quality curve BE_{HI} has a lower C/N value as a whole than the standard-quality curve BE_{NR}. The REC current I_{RECHI} corresponding to the peak value of the high-quality curve BE_{HI} is lower than the REC current I_{RECNR} corresponding to the peak value of the standard-quality curve BE_{NR}.

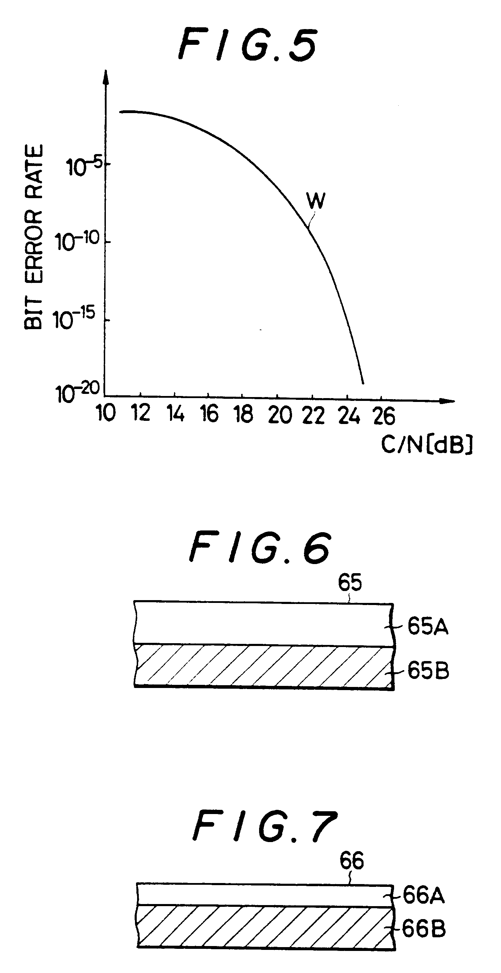

In general, however, in the relationship between the C/N value and the playback data bit error rate, the bit error rate tends to decrease as the C/N value increases, as indicated by a curve W in Figure 5. Therefore, as can be seen from the relationship in Figure 4 on the basis of this tendency, when the standard or high-quality PCM audio signal S_{ADNR} or S_{ADHI} is recorded the REC current I_{REC} can be set to be a current value I_{RECNR} or I_{RECHI} corresponding to the peak value of the curve BE_{NR} or BE_{HI}, so that the audio signal can be recorded on the tape 1 at a minimum bit error rate based on the relationship shown in Figure 5.

In practice, the system controller 31 supplies the selection signal C4 or C5 for selecting the bias resistances R1 to R4 or R5 to R8 (Figure 3) in accordance with the recording quality setting signal K_{SQ}, so as to cope with the above-mentioned relationships.

Secondly, the REC current switching condition includes the difference in magnetic tape (that is, a coating type or vapour deposition type magnetic tape), as shown in Figure 3.

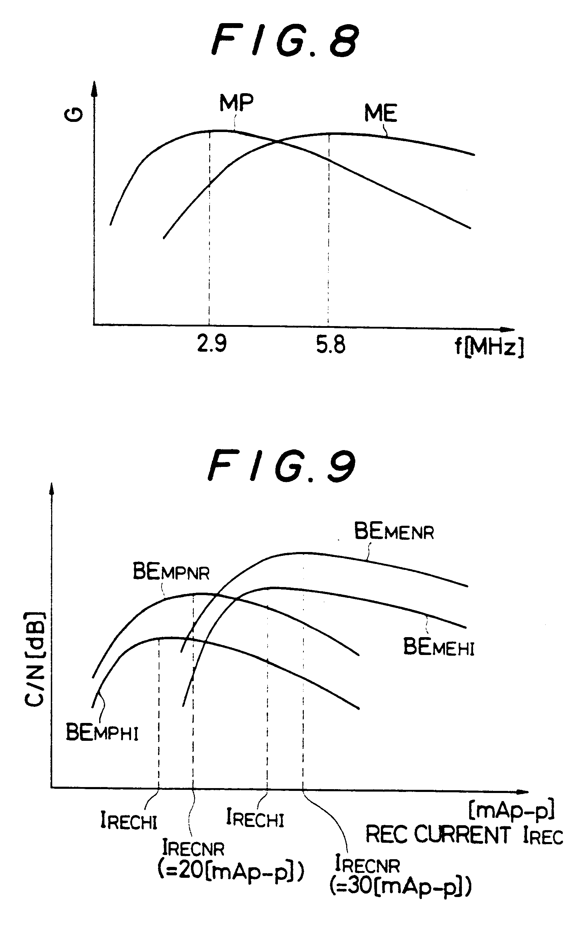

More specifically, as shown in Figure 6, a coating type magnetic tape (MP) 65 manufactured by coating a magnetic layer 65A on a base 65B is known. The frequency characteristic of the MP tape 65 has a peak level in a region near the frequency f1 (2.9 MHz), as indicated by a curve MP in Figure 8. That is, the curve MP bends downward as the frequency f is increased/decreased.

In contrast to this, as shown in Figure 7, a vapour deposition type magnetic tape (ME tape) 66 manufactured by forming a magnetic layer 66A on a base 66B by sputtering is known. Since the ME tape 66 has a small thickness, a high-frequency signal component may often punch through the magnetic layer 66A during recording. For this reason, its frequency characteristic has a peak level near the high frequency f2 (5.8 MHz), as indicated by a curve ME in Figure 8. Thus, the characteristic curve bends downward as the frequency f is increased/decreased.

In addition, since the magnetic layer 65A of the MP tape 65 is formed by coating, an axis of easy magnetization is not typically formed on the surface of the MP tape 65. In contrast to this, since the ME tape 66 is subjected to oblique vapour deposition treatment, the axis of easy magnetization tends to be typically formed on the surface of the ME tape 66.

Figure 9 shows the relationship between the REC current I_{REC} and the C/N value in correspondence with Figure 4, when the MP or ME tape 65 or 66 is selected as the tape 1. The characteristic curves BE_{MENR} and BE_{MEHI} obtained when data are recorded in the standard and high-quality REC modes using the ME tape 66 tend to be plotted nearer the larger REC current I_{REC} and large C/N value than the characteristic curves BE_{MPNR} and BE_{MPHI} obtained when data are recorded in the standard and high-quality REC modes using the MP tape 65.

Therefore, the REC current I_{RECHI} corresponding to a maximum C/N value obtained when data are recorded in the high-quality REC mode using the MP tape 65, the REC current I_{RECNR} corresponding to a maximum C/N value obtained when data are recorded in the standard-quality REC mode using the MP tape 65, the REC current I_{RECHI} corresponding to a maximum C/N value obtained when data are recorded in the high-quality REC mode using the ME tape 66, and the REC current I_{RECNR} corresponding to a maximum C/N value obtained when data are recorded in the standard-quality REC mode using the ME tape 66 are different from each other.

The system controller 31 gives the difference in tape as the REC current switching condition, as shown in Figure 3, based on the tape discrimination signal K_{ID} from a tape discriminator 42 (Figure 2). The controller 31 supplies the switching signal C4 or C5 for selecting the bias resistors R1, R2, R5 and R6 when the MP tape 65 is used, or for selecting the bias resistors R3, R4, R7 and R8 when the ME tape 66 is used.

In this embodiment, when a cassette tape is loaded into the VTR as the tape 1, the tape discriminator 42 discriminates, based on an ID hole preformed in a cassette case, if the tape 1 is MP or ME magnetic tape.

In this embodiment, a difference in tape speed is given as the REC current switching condition in addition to the differences in REC mode and magnetic tape.

More specifically, the data REC/PB apparatus 10 can designate an SP mode in which the tape 1 travels at a standard playback speed (SP speed) and an LP mode in which the tape 1 travels at a long-playback speed (LP speed). As a result, compatibility for a variety of magnetic recording media is increased.

In this case, when the tape speed of the tape 1 is switched, the scanning direction of the A and B head 12A and 12B with respect to the axis of easy magnetization formed on the tape 1 is changed. This change influences the frequency characteristics of the playback data D7 and D8.

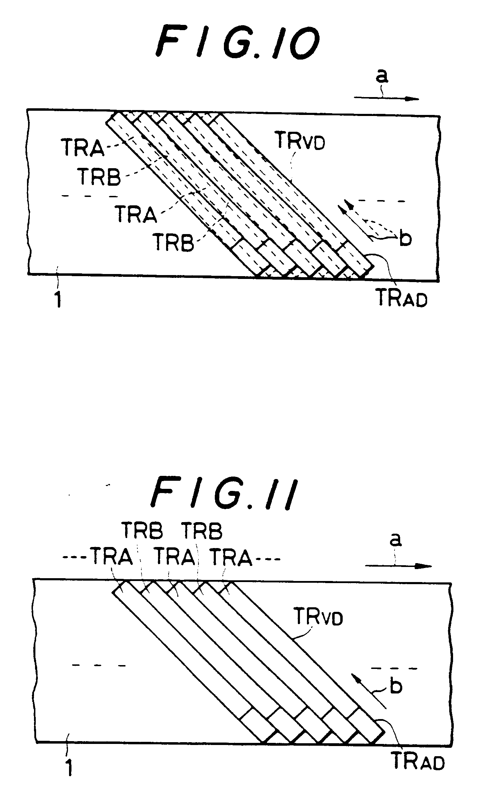

More specifically, the recording tracks TRA and TRB formed when the tape 1 travels in the LP mode are formed, as indicated by broken lines in Figure 10, in a scanning direction different from that in the SP mode indicated by solid lines. Therefore, if the scanning directions of the recording tracks TRA and TRB are different with respect to the axis of easy magnetization, the recording data on the tape 1 are influenced by a different in tape speed.

When a user supplies a tape speed setting signal K_{RN} using the operation panel 41, the system controller 31 supplies the switching signal C4 or C5 for selecting the bias resistors R1, R3, R5 and R7 in the SP mode or for selecting the bias resistors R2, R4, R6 and R8 in the LP mode, as shown in Figure 3, in accordance with the input tape speed.

In this manner, when the tape speed is switched, the audio signal S_{AD} can be recorded on the tape 1 with a C/N value which can minimise the bit error rate during the playback operation.

In the above arrangement, when the user loads the tape 1 into the VTR in the REC mode, the type of the tape 1 is automatically discriminated by the tape discriminator 42, and is supplied to the system controller 31 as the tape discrimination signal K_{ID}. When the user sets the tape speed of the tape 1 and the quality of the recording audio signal using the operation panel 41, the tape speed setting signal K_{RN} and the recording quality setting signal K_{SQ} are supplied to the system controller 31.

The system controller 31 selects a corresponding one of the REC current switching conditions shown in the first to eighth rows in Figure 3 and supplies the switching signal C4 or C5 for connecting a corresponding one of the bias resistors R1 to R8 to the REC amplifier 35 depending on whether the input recording quality setting signal K_{SQ} corresponds to the standard or high-quality mode, if the content of the tape discrimination signal K_{ID} corresponds to the MP or ME tape, and if the tape speed setting signal K_{RN} corresponds to the LP or SP speed.

Note that in this case, a control signal to the system controller 31 can be a selection command manually supplied to the operation panel 41.

In this manner, the REC amplifier 35 is controlled so as to generate the REC current I_{RECA} or I_{RECB} which is switched to a value suitable for playing back a signal having a C/N value corresponding to the minimum bit error rate.

For example, as shown in the fifth row in Figure 3, when the high-quality mode is set by the recording quality setting signal K_{SQ}, the MP tape is selected by the tape discrimination signal K_{ID}, and the SP speed is set by the tape speed setting signal K_{RN}, the controller 31 supplies the switching signal C4 or C5 for connecting the bias resistor R5 to the REC amplifier 35.

In this case, the REC current I_{RECA} or I_{RECB} from the REC amplifier 35 corresponds to the REC current I_{RECHI} shown in Figure 9. As a result, the audio signal S_{AD} is recorded on the tape 1 under the optimum operation condition corresponding to the maximum C/N value on the curve BE_{MPHI}. As has been described above with reference to Figure 5, the PCM audio signal can be recorded under the condition capable of playing back the audio signal S_{AD} which was recorded at a sufficiently low bit error rate for practical use.

In the above embodiment, the tape speed of the tape 1 is switched between two modes, that is, the SP and LP modes. Instead, if the REC currents I_{RECA} and I_{RECB} for minimizing the bit error rate are generated in accordance with variable speed PB mode for driving the tape 1 at a speed several times as fast as the normal speed, the same effect as described above can be obtained.

In the above embodiment, the biphase-mark modulation and 8 to 10 modulation have been described. However, the invention is not limited to this, and can be widely applied to a case wherein a plurality of digital data having different recording densities are recorded.

In the above embodiment, magnetic tape is used as a magnetic recording medium. However, the invention is not limited to this. For example, other magnetic recording media such as a magnetic disc may be employed.

In the above embodiment, the invention is applied to the case wherein the PCM audio signal of the 8-mm format VTR is recorded. However, the invention is not limited to this, but can be applied to recording/playback apparatuses which record/play back data from magnetic recording media for recording digital signals of different recording densities, while maintaining compatibility.

In the above embodiment, the bias resistors of the REC amplifier 35 are switched in order to obtain the REC currents I_{RECA} and I_{RECB} corresponding to the REC current switching condition. However, the invention is not limited to this. Only a current switching control means capable of switching to set an REC current flowing through a magnetic head to a predetermined current value is needed.

As described above, when recording data having different recording densities are recorded on a magnetic recording medium, an REC current capable of playing back the recording data with a low bit error rate is supplied to the magnetic head. Thus, a data recording apparatus capable of playing back digital data with high fidelity can be easily realized.

In a magnetic recording/playback apparatus for recording/playing back digital data on/from a magnetic recording medium, different magnetic recording media may often be used while maintaining compatability. It was found that when data were recorded on various magnetic recording media by an identical REC current, bit error rates when data was played back from specific magnetic recording media were considerably degraded.

More specifically, when MP and ME tapes were used as the magnetic recording media, a method of selecting an REC current to be a value corresponding to a maximum C/N of playback signal at a Nyquist frequency (that is, a frequency half the clock frequency of data to be recorded) was adopted.

The Nyquist frequency represents a maximum frequency of a base-band signal component forming data to be recorded. Therefore, it is assumed that when the optimum REC current value is selected to maximize the C/N, the bit error rate can be minimized accordingly. This is because in a normal magnetic recording/playback apparatus, a C/N value of the playback signal is degraded with an increase in frequency.

However, according to the experiments, it was found that even if the REC current were selected to be an optimum REC current value, the bit error rate could not be minimized.

This leads to an embodiment of the invention which can further improve a bit error rate when different types of magnetic recording media are used.

A bit error rate was measured when a biphase-mark modulated standard-quality PCM audio signal S_{AD} was recorded on an MP tape using the REC current having an optimum REC current value I_{RECOPT} at the Nyquist frequency F_{NYN}, and then played back therefrom. The REC current I_{REC} was varied on the basis of the measurement result as a reference value (= 0 dB). It was found that the bit error rate had a minimum value characteristic curve portion wherein as the REC current I_{REC} was increased, the bit error rate was temporarily decreased accordingly and thereafter was increased after it had reached a minimum value, as indicated by a curve K_{MPNR} in Figure 14.

Similarly, a bit error rate was measured when an 8 to 10 modulated high-quality PCM audio signal S_{AD} was recorded on an MP tape using the REC current having an optimum REC current value I_{RECOPT} at the Nyquist frequency f_{NYH} and then played back therefrom. The REC current I_{REC} was varied on the basis of the measurement result as a reference value (= 0 dB). It was found that the bit error rate had a minimum value characteristic curve portion wherein as the REC current I_{REC} was increased, the bit error rate was temporarily decreased accordingly and thereafter was increased after it had reached a minimum value, as indicated by a curve K_{MPHI} in Figure 14.

By utilizing the above characteristics, for both the standard and high-quality PCM audio signals, the bit error rate can be reduced if the value of the REC current I_{REC} is increased by a predetermined amount from the REC current value (that is, optimum REC current value I_{RECOPT} at the Nyquist frequency f_{NYN} or f_{NYH}) as a reference value.

In contrast to this, a similar experiment was repeated for an ME tape. It was found that the bit error rate plots a substantially flat characteristic curve in a change range of the REC current corresponding to the above-mentioned minimum value characteristic curve portion for the MP magnetic tape, as represented by curves K_{MENR} and K_{MEHI} in Figure 14.

Based on the above relationship, third, fourth, seventh and eighth bias resistors R3, R4, R7 and R8 are determined to have resistances so that the REC currents I_{RECA} and I_{RECB} have the optimal REC current value I_{RECOPT} at the Nyquist frequency f_{NYN} or f_{NYH} when the ME tape is used as the tape 1.

First, second, fifth or sixth bias resistors R1, R2, R5 or R6 are determined to have resistances so that the REC currents I_{RECA} and I_{RECB} have larger values by a predetermined value, that is, 0.5 to 3.0 dB from the optimal REC current value I_{RECOPT} at the Nyquist frequency f_{NYN} or f_{NYH} in accordance with the standard or high-quality REC mode when the MP tape is used as the tape 1.

According to the experiments, it was found that when the REC current was increased within the range of 0.5 to 3.0 dB in Figure 14, the bit error rate could be further reduced as compared with the optimum REC current value I_{RECOPT} around I_{RECPCM} at which the bit error rate was minimized.

## Claims

1. An apparatus (10) for recording an analogue video signal and a digital audio signal in parallel adjacent tracks (TRA, TRB) on a magnetic recording medium (1), said analogue video signal comprising frequency modulated signal components having a predetermined frequency spectrum, and said digital audio signal comprising components having a peak in the frequency spectrum of the analogue video signal, the apparatus comprising:
a first audio circuit (21) comprising:
means for sampling an input audio signal at a given standard sampling rate and converting it into P-bits PCM digital data;
means for compressing the PCM digital data; and
means for biphase-mark modulating the compressed PCM digital data so that the different binary states correspond to different frequency components to produce a standard recording signal having a standard density for standard quality recording;
wherein the standard recording signal has a central spectrum component substantially the same as the recordable frequency spectrum of the frequency-modulated analogue video signal;
a recording amplifier (35) for amplifying the standard recording signal; and
at least two rotary magnetic heads (12A, 12B) having air gaps of different azimuth angles for tracking the parallel adjacent tracks and recording the amplified recording signal therein;
characterised by:
the first audio circuit further comprising means for adding a cyclic redundancy check (CRC) error code to the P-bit PCM digital data; the compressing means comprising a non-linear encoder or compressor (21) for compressing the P-bit digital data with the CRC error code to Q-bit data (where Q < P) which is modulated by the biphase-mark modulating means; a second audio circuit (22) comprising:
means for sampling the input audio signal at a given high-quality sampling rate higher than the standard sampling rate to produce sampled digital data;
means for adding a Cross-Interleaved Reed-Solomon (CIRS) error code to the sampled digital data; and
means for segmenting the digital data bits with the CIRS error code into N-bit blocks, converting each N-bit block into an M-bit data string, and selecting 2^{N} patterns from 2^{M} converted patterns to produce a group code modulated high-quality recording signal having a high density for high-quality recording;
wherein the high-quality recording signal has a central spectrum component in a frequency band lower than the frequency spectrum component of the standard recording signal;
the recording amplifier being alternatively operable to amplify the high-quality recording signal for supply to the magnetic heads; and
means (36) for varying a setting condition of an amplified current from the recording amplifier corresponding to the standard-quality or high-quality recording signal.

2. Apparatus (10) according to claim 1 wherein said second circuit (22) performs a modulation where N is eight and M is ten.

3. Apparatus (10) according to claim 1 or claim 2 wherein said setting condition of said recording amplifier (35) is switched in accordance with the type of said magnetic recording medium (1).

4. Apparatus (10) according to claim 1, claim 2 or claim 3 wherein said setting condition of said recording amplifier (35) is switched in accordance with a relative speed between said magnetic recording medium (1) and said rotary magnetic heads (12A, 12B).

5. Apparatus (10) according to claim 1, claim 3 or claim 4 wherein said setting condition of said recording amplifier (35) is switched by setting means (36) for setting a bias resistance of said recording amplifier (35).

6. Apparatus (10) according to claim 5 wherein said setting means (36) comprises a plurality of bias resistors (R1 to R8) of said recording amplifier (35) and switching means (SW) for switching said resistors (R1 to R8).

7. Apparatus (10) according to claim 1 or claim 3 wherein said recording amplifier (35) is set so that the recording current is increased by a predetermined amount from an optimum recording current value at a Nyquist frequency of the digital audio signal.

## Patentansprüche

1. Gerät (10) zum Aufzeichnen eines analogen Videosignals und eines digitalen Audiosignals auf einem magnetischen Aufzeichnungsmedium (1) in parallelen benachbarten Spuren (TRA, TRB), wobei das analoge Videosignal frequenzmodulierte Signalkomponenten mit einem vorbestimmten Frequenzspektrum aufweist und das digitale Audiosignal Komponenten enthält, die in dem Frequenzspektrum des analogen Videosignals einen Spitzenwert haben,
mit einer ersten Audioschaltung (21), bestehend aus
- einer Einrichtung zum Abtasten eines Eingangs-Audiosignals mit einer gegebenen Standard-Abtastrate und zu seiner Umwandlung in digitale P-Bit-PCM-Daten,
- einer Einrichtung zum Komprimieren der digitalen PCM-Daten und
- einer Einrichtung zum Biphase-Mark-Modulieren der komprimierten digitalen PCM-Daten derart, daß die verschiedenen binären Zustände unterschiedlichen Frequenzkomponenten entsprechen, zur Erzeugung eines Standard-Aufzeichnungssignals mit einer Standard-Dichte für die Aufzeichnung in Standard-Qualität, wobei das Standard-Aufzeichnungssignal im wesentlichen die gleiche zentrale Spektralkomponente besitzt wie das aufzuzeichnende Frequenzspektrum des frequenzmodulierten analogen Videosignals,
mit einem Aufnahmeverstärker (35) zum Verstärken des Standard-Aufzeichnungssignals, sowie mit wenigstens zwei rotierenden Magnetköpfen (12A, 12B) mit unterschiedlichen Luftspalt-Azimutwinkeln zum Abtasten der parallelen benachbarten Spuren und zum Aufzeichnen des verstärkten Aufzeichnungssignals in diesen Spuren,
**dadurch gekennzeichnet**,
daß die erste Audioschaltung (21) eine Einrichtung zum Addieren eines zyklischen Redundanzfehlerprüfkodes (CRC-Fehlerkode) zu den digitalen P-Bit-PCM-Daten aufweist, daß die Kompressionseinrichtung einen nichtlinearen Kodierer oder Kompressor (21) zum Komprimieren der digitalen P-Bit-Daten mit dem CRC-Fehlerkode zu Q-Bit-Daten (mit Q < P) aufweist, die durch die Biphase-Mark-Modulationseinrichtung moduliert werden,
daß eine zweite Audioschaltung (22) vorgesehen ist bestehend aus
- einer Einrichtung zur Erzeugung von digitalen Abtastdaten durch Abtasten des Eingangs-Audiosignals mit einer gegebenen Hochqualitäts-Abtastrate, die größer ist als die Standard-Abtastrate,
- einer Einrichtung zum Addieren eines kreuzverschachtelten Reed-Solomon-Fehlerkodes (CIRS-Fehlerkode = Cross- Interleaved Reed-Solomon-Fehlerkode) zu den digitalen Abtastdaten
- und einer Einrichtung zum Segmentieren der digitalen Datenbits mit dem CIRS-Fehlerkode in N-Bit-Blöcke, ferner zum Umwandeln jedes N-Bit-Blocks in eine M-Bit-Datenreihe und zur Auswahl von 2^{N} Mustern aus 2^{M} umgewandelten Mustern zur Erzeugung eines gruppenkodemodulierten Hochqualitäts-Aufzeichnungssignals mit hoher Dichte für Hochqualitäts-Aufzeichnung, wobei das Hochqualitäts-Aufzeichnungssignal eine zentrale Spektralkomponente in einem Frequenzband besitzt, das niedriger ist als die Frequenzspektrumskomponente des Standard-Aufzeichnungssignals,
daß der Aufnahmeverstärker alternativ so betätigbar ist, daß er das Hochqualitäts-Aufzeichnungssignal zur Ansteuerung der Magnetköpfe verstärkt,
und daß eine Einrichtung (36) vorgesehen ist zur Änderung des Einstellzustands des aus dem Aufnahmeverstärker kommenden verstärkten Stroms entsprechend dem Standardqualitäts- oder dem Hochqualitäts-Aufzeichnungssignal.

2. Gerät (10) nach Anspruch 1, bei dem die zweite Schaltung (22) eine Modulation ausführt, bei der M gleich 8 und N gleich 10 ist.

3. Gerät (10) nach Anspruch 1 oder 2, bei dem der Einstellzustand des Aufnahmeverstärkers (35) in Abhängigkeit vom Typ des magnetischen Aufzeichnungsmediums (1) umgeschaltet wird.

4. Gerät (10) nach Anspruch 1, 2 oder 3, bei dem der Einstellzustand des Aufnahmeverstärkers (35) in Abhängigkeit von der Relativgeschwindigkeit zwischen dem magnetischen Aufzeichnungsmedium (1) und den rotierenden Magnetköpfe (12A, 12B) umgeschaltet wird.

5. Gerät (10) nach Anspruch 1, 3 oder 4, bei dem der Einstellzustand des Aufnahmeverstärkers (35) durch eine Einstelleinrichtung (36) zum Einstellen eines Vorwiderstands des Aufnahmeverstärkers (35) umgeschaltet wird.

6. Gerät (10) nach Anspruch 5, bei dem die Einstelleinrichtung (36) eine Mehrzahl von Widerständen (R1 bis R8) für den Aufnahmeverstärker (35) sowie Schaltmittel (SW) zum Umschalten der Widerstände (R1 bis R8) umfaßt.

7. Gerät (10) nach Anspruch 1 oder 3, bei dem der Aufnahmeverstärker (35) so eingestellt wird, daß der Aufzeichnungsstrom von einem optimalen Wert des Aufzeichnungsstroms bei der Nyquist-Frequenz des digitalen Audiosignals aus um einen vorbestimmten Betrag erhöht wird.

## Revendications

1. Appareil (10) pour enregistrer un signal vidéo analogique et un signal audio numérique dans des pistes voisines parallèles (TRA, TRB) sur un support d'enregistrement magnétique (1), ledit signal vidéo analogique comprenant des composantes de signal modulé en fréquence ayant un spectre de fréquence prédéterminé, et ledit signal audio numérique comprenant des composantes ayant une crête dans le spectre de fréquence du signal vidéo analogique, l'appareil comprenant :
un premier circuit audio (21) comprenant :
un dispositif pour échantillonner un signal audio d'entrée à une vitesse d'échantillonnage standard donnée et pour le convertir en données numériques MIC à P bits ;
un dispositif pour compresser les données numériques MIC ; et
un dispositif pour moduler par déplacement de phase à deux états les données numériques MIC compressées de sorte que les différents états binaires correspondent à différentes composantes de fréquence pour produire un signal d'enregistrement standard ayant une densité standard pour un enregistrement d'une qualité standard ;
dans lequel le signal d'enregistrement standard a une composante de spectre centrale essentiellement la même que le spectre de fréquence enregistrable du signal vidéo analogique modulé en fréquence ;
un amplificateur d'enregistrement (35) pour amplifier le signal d'enregistrement standard ; et
au moins deux têtes magnétiques tournantes (12A, 12B) ayant des entrefers à air d'angle d'azimut différents pour suivre des pistes voisines parallèles et pour enregistrer le signal d'enregistrement amplifié sur celle-ci ;
caractérisé par :
le premier circuit audio comprenant en outre un dispositif pour ajouter un code d'erreur de contrôle de redondance cyclique (CRC) aux données numériques MIC à P bits ; le dispositif de compression comprenant un codeur non linéaire ou compresseur (21) pour compresser les données numériques à P bits avec le code d'erreur CRC pour des données de Q bits (où Q < P) qui est modulé par le dispositif de modulation par déplacement de phase à deux états ;
un second circuit audio (22) comprenant :
un dispositif pour échantillonner le signal audio d'entrée à une vitesse d'échantillonnage de haute qualité supérieure à la vitesse d'échantillonnage standard pour produire des données numériques échantillonnées ;
un dispositif pour ajouter un code d'erreur Reed-Solomon à entrelacement croisé (CIRS) aux données numériques échantillonnées ; et
un dispositif pour segmenter les données binaires numériques avec le code d'erreur CIRS en des blocs de N bits, pour convertir chaque bloc de N bits en une suite de données de M bits, et pour sélectionner des structures de 2^{N} à partir des structures converties 2^{M} pour produire un signal d'enregistrement de haute qualité modulé par un code de groupe ayant une densité élevée pour un enregistrement de haute qualité ;
dans lequel le signal d'enregistrement de haute qualité a une composante de spectre centrale dans une bande de fréquence inférieure à la composante de spectre de fréquence du signal d'enregistrement standard ;
l'amplificateur d'enregistrement étant alternativement utilisable pour amplifier le signal d'enregistrement de haute qualité à appliquer aux têtes magnétiques ; et un dispositif (36) pour faire varier un état de réglage d'un courant amplifié à partir de l'amplificateur d'enregistrement correspondant au signal d'enregistrement de qualité standard ou de haute qualité.

2. Appareil (10) selon la revendication 1 dans lequel ledit second circuit (22) réalise une modulation où N vaut huit et M vaut dix.

3. Appareil (10) selon la revendication 1 ou la revendication 2 dans lequel ledit état de réglage dudit amplificateur d'enregistrement (35) est commuté selon le type dudit support d'enregistrement magnétique (1).

4. Appareil (10) selon la revendication 1, la revendication 2, ou la revendication 3 dans lequel ledit état de réglage dudit amplificateur d'enregistrement (35) est commuté selon une vitesse relative entre ledit support d'enregistrement magnétique (1) et lesdites têtes magnétiques tournantes (12A, 12B).

5. Appareil (10) selon la revendication 1, la revendication 3 ou la revendication 4, dans lequel ledit état de réglage dudit amplificateur d'enregistrement (35) est commuté par un dispositif de réglage (36) pour régler une résistance de polarisation dudit amplificateur d'enregistrement (35).

6. Appareil (10) selon la revendication 5 dans lequel ledit dispositif de réglage (36) comprend une pluralité de résistances de polarisation (R1 à R8) dudit amplificateur d'enregistrement (35) et un dispositif de commutation (SW) pour commuter lesdites résistances (R1 à R8).

7. Appareil (10) selon la revendication 1 ou la revendication 3 dans lequel ledit amplificateur d'enregistrement (35) est réglé de sorte que le courant d'enregistrement augmente d'une quantité prédéterminée à partir d'une valeur de courant d'enregistrement optimum à une fréquence de Nyquist du signal audio numérique.
